# EUROPÄISCHE PATENTSCHRIFT

(11) **EP 0 761 086 B1**
(45) Veröffentlichungstag und Bekanntmachung des Hinweises auf die Patenterteilung: **27.06.2001**
(21) Anmeldenummer: 96112076.3
(22) Anmeldetag: 26.07.1996
(51) Int. Cl.: A01F 15/10, A01D 90/02

(54) **Ballenpresse, insbesondere selbstfahrende Grossballenpresse**
Balls, especially automotive big ball press
Presse à balles spécialement presse automotrice pour grandes balles

(30) Priorität: 25.08.1995 DE 19531240
(43) Veröffentlichungstag der Anmeldung: 12.03.1997
(73) Patentinhaber: SAME DEUTZ-FAHR S.P.A., 24047 Treviglio (Bergamo) (IT)
(72) Erfinder: Von Allwörden, Wilhelm, Dipl.-Ing., 89168 Oberstotzingen (DE)
(74) Vertreter: Quinterno, Giuseppe

(56) Entgegenhaltungen:
- EP-A- 0 120 780
- EP-A- 0 508 186
- DE-A- 3 913 496
- FR-A- 2 368 881
- FR-A- 2 544 164

## Beschreibung

Die Erfindung betrifft eine Zuführeinrichtung einer Ballenpresse für eine zu pressende Menge, insbesondere für ein landwirtschaftliches Erntegut, gemäß den Merkmalen des Oberbegriffes des Patentanspruches 1.

Aus der DE-A-39 13 496 ist eine Zuführeinrichtung einer Ballenpresse mit einem unter einem Presskanal angeordneten und von einem Kurbeltrieb des Presskolbens aus angetriebenem Rotorförderer bekannt, der das Erntegut synchron zur Presskolbenbewegung über Kurvenbahn gesteuerte Förderrechen durch einen Zuführkanal in den Presskanal befördert, wobei im Bereich einer Seitenwand eine um die Rotationsachse des die Förderrechen tragenden Rotorkörpers verschwenkbare Kurbelbahn gelagert ist, in der die Laufrollen der Förderrechen geführt sind und wobei an der Kurvenbahn von dem Kurbeltrieb aus angetriebene Koppelglieder derart angelenkt sind, daß die Zinkenspitzen der Förderrechen zum Befüllen des Zuführkanales eine entsprechende Anzahl von Förderkurven beschreiben, wobei sich deren Lage während des Befüllvorganges etwa um die Stärke der Mengenportionen (a, b, c usw.) entgegen der Förderrichtung der zu pressenden Menge verschiebt, bei der zum Einschieben der zu pressenden Menge in den Presskanal die Zinkenspitzen der Förderrechen wenigstens eine Förderkurve beschreiben.

Eine solche Zuführeinrichtung hat sich konstruktiv in der Praxis bewährt, wobei jedoch der Nachteil auftauchte, daß durch die konstanten Förderkurven die Mengenportionen a, b, c usw. unterschiedlich groß sein können, je nachdem, wie groß das Volumen dieser Portionen ist, die von den Förderzinken aufgenommen beziehungsweise gefördert werden. Aufgrund der schwankenden Dichte beziehungsweise des schwankenden Volumens dieser Mengenportionen kommt es im weiteren Pressverlauf, bei dem aus diesen Mengenportionen ein Ballen gepreßt wird, zu einer unterschiedlichen Dichte des Ballens, was zu einem schlechten Zusammenhalt des gesamten Ballens führt und auch die Lagerfähigkeit des Ballens, insbesondere bei bestimmten Arten von Mengen, die gepreßt werden, negativ beeinflußt.

Der Erfindung liegt daher die Aufgabe zugrunde, eine Zuführeinrichtung einer Ballenpresse derart auszugestalten, daß die Befüllung des Presskanales mit weitestgehend gleichmäßig dichten Mengenportionen erfolgt, so daß eine weitestgehend homogene Dichte des Ballens erreicht wird.

Diese Aufgabe wird durch eine Zuführeinrichtung gelöst, die die Merkmale des Anspruchs 1 aufweist.

Aufgrund der Beeinflussung der Kurvenbahn der Fördermittel, insbesondere der Förderrechen, ist es möglich, die von den Fördermitteln geförderten Mengenportionen zu steuern und somit unterschiedliche Dichten beziehungsweise Volumen von Mengenportionen zu erreichen, damit die Mengenportionen, die dem Presskanal zugeführt werden, weitestgehend eine gleichmäßige Dichte aufweisen. Wenn sichergestellt ist, daß die Mengenportionen eine weitestgehend gleichmäßige Dichte aufweisen, führt dies auch zu einer weitestgehenden Homogenität des aus einer Vielzahl von Mengenportionen bestehenden Ballens, der am Ende des Pressvorganges abgegeben wird. Das als Hydraulikzylinder ausgebildete Bewegungselement, ist abhängig von Betriebsparametern der Ballenpresse steuerbar. Dadurch, daß die Fördermittel unter Zwischenschaltung des Hydraulikzylinders mit dem Kurbeltrieb in Verbindung stehen, kann die Stellung der Fördermittel in Abhängigkeit der erfaßten Betriebsparameter der Ballenpresse verändert werden. Als Betriebsparameter sind hier insbesondere das Volumen, die Masse oder die Dichte einer einzelnen Mengenportion aufzuführen. Diese Betriebsparameter können ergänzt werden beispielsweise durch die Geschwindigkeit der Ballenpresse selber, durch Geschwindigkeiten von einzelnen oder mehreren Komponenten der Ballenpresse sowie weiteren Größen.

Weitere Ausgestaltungen der Erfindung sowie ein konkretes Ausführungsbeispiel sind im folgenden anhand der Figuren erläutert.

Es zeigen:
- Fig. 1 bis 3:: den Bewegungsablauf innerhalb einer erfindungsgemäß ausgestalteten Ballenpresse,
- Fig. 4:: eine Steuereinrichtung zur Steuerung der Bewegungsabläufe.

In einem Preßkanal 1 ist ein Preßkolben 2 über einen Kurbeltrieb 3 in horizontaler Ebene bewegbar. Der Preßkanal 1 besitzt eine Einfüllöffnung 4, an die sich ein Zuführkanal 5 anschließt. Im Zuführkanal 5 bewegen sich Fördermittel (Förderrechen 6), die das von einem Schwadaufnehmer 7 aufgenommene und von Querförderschnecken 8 zusammengeführte Erntegut 9 bis in den Preßkanal 1 fördern. An einem Rotorkörper 10 sind drei Förderrechen 6 schwenkbar um eine Zinkenwelle 11 gelagert. Der Rotorkörper 10 ist auf einer Zentralwelle 12 befestigt und mit dieser über einen Kegelradantrieb vorzugsweise in der doppelten Drehzahl des Kurbeltriebes 3 antreibbar. Ein weiterer vom Kurbeltrieb 3 abgeleiteter Kegelradtrieb ist zu einer auf dem Preßkanal 1 angeordneten Bindeeinrichtung 15 geführt. Die Förderrechen 6 sind in den Zinkenwellen 11 im Rotorkörper 10 aufgenommen und über Lenkhebel 16, die an ihren freien Enden mit Laufrollen 17 bestückt sind, in einer Kurvenbahn 18 geführt. Die Kurvenbahn 18 ist mit ihrem Lagerkörper in einer in der Seitenwand des Zuführkanales 5 angeordneten Lagerstelle auf der Zentralwelle 12 drehbar gelagert. Sie trägt einen Bolzen 22, an dem ein Koppelglied 23 angelenkt ist und dessen anderes Ende mit einem Schwenkhebel 25 gelenkig verbunden ist. Der Schwenkhebel 25 ist annähernd mittig um einem Gelenkpunkt 24 verschwenkbar an der Seitenwand angebracht.

In erfindungsgemäßer Weise ist zwischen dem Kurbeltrieb 3 und dem einen Ende des Schwenkhebels 25 ein Hydraulikzylinder 29 angeordnet, der über einen nicht dargestellten Hydraulikkreislauf steuerbar ist. Alternativ zu der Anordnung des Hydraulikzylinders 29 zwischen dem Kurbeltrieb 3 und dem Schwenkhebel 25 kann der Hydraulikzylinder 29 auch zwischen einem Ende des Schwenkhebels 25 und dem Bolzen 22 des Rotorkörpers 10 angeordnet werden. Dann greift am gegenüberliegenden Ende des Schwenkhebels 25 eine Koppelstange an, die wiederum mit dem Kurbeltrieb 3 in Wirkverbindung steht Zur Erhöhung der Freiheitsgrade ist es weiterhin denkbar, jeweils einen Hydraulikzylinder 29 zwischen dem Kurbeltrieb 3 und dem Schwenkhebel 25 beziehungsweise dem Schwenkhebel 25 und dem Bolzen 22 anzuordnen. Anstelle des Hydraulikzylinders 29 sind auch andere Ausführungsformen, die eine im wesentlichen lineare Bewegung ermöglichen, denkbar.

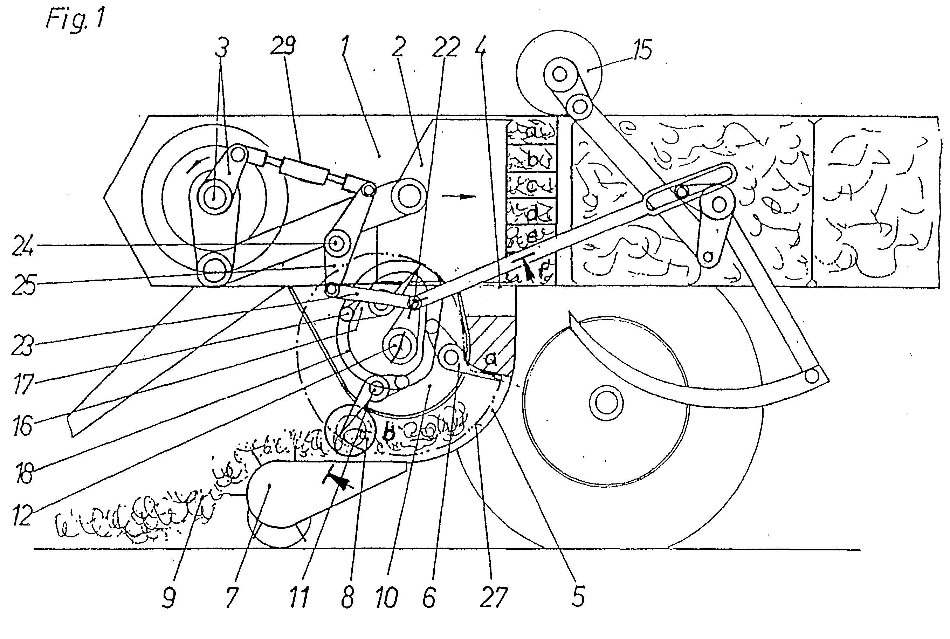

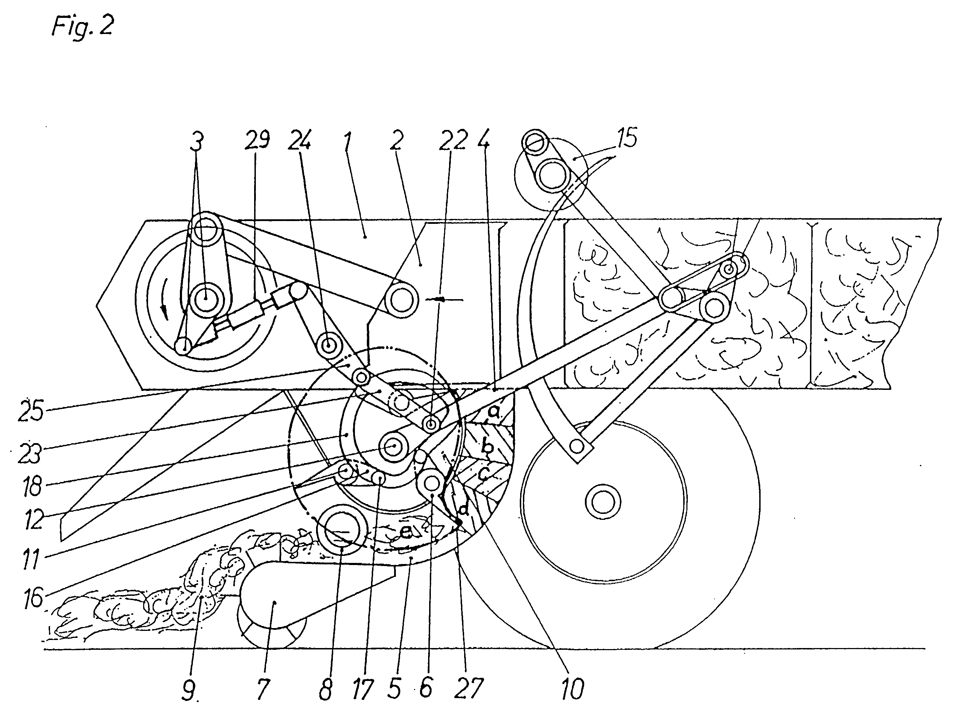

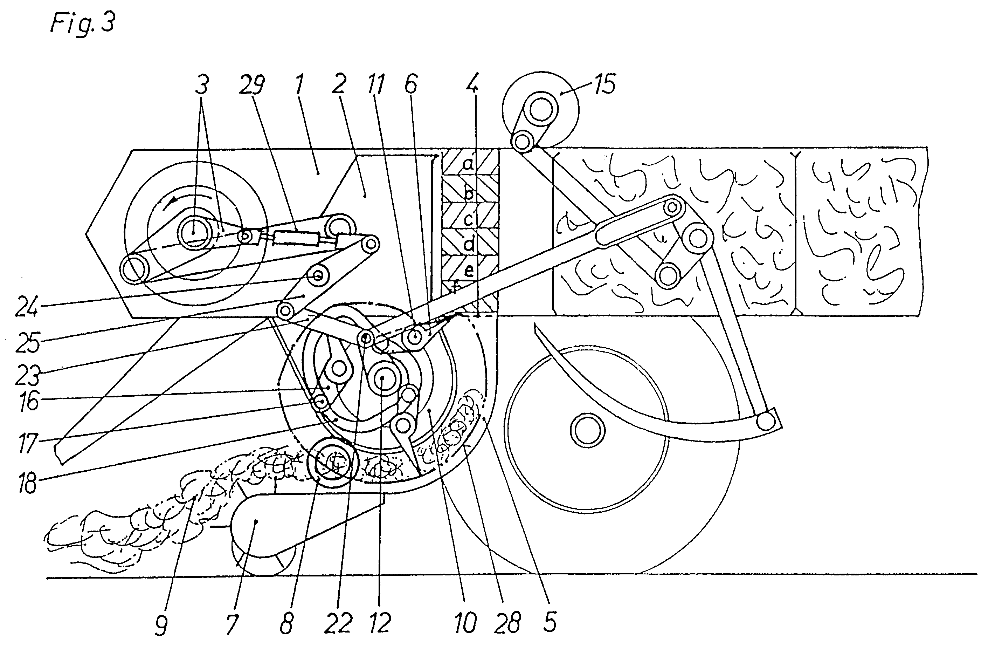

Durch diese Anordnung wird die in dem Lager gelagerte Kurvenbahn 18 in Abhängigkeit von der Bewegung des Kurbeltriebes 3 und somit von der Bewegung des Preßkolbens 2 in eine pendelnde Schwenkbewegung versetzt. Dadurch beschreiben die Zinkenspitzen der Förderrechen 6 zum Befüllen des Zuführkanales 5 eine entsprechende Anzahl von in Abhängigkeit von Betriebsparametern veränderbare Förderkurven 27, wobei sich deren Lage während des Befüllvorganges etwa um die Stärke der Mengenportionen a, b, c, d, e, f entgegen der Förderrichtung des Erntegutes 9 verschiebt. Zum Einschieben des Erntegutes 9 in den Preßkanal 1 beschreiben dann die Zinkenspitzen der Förderrechen 6 wenigstens eine Förderkurve 28, die bei zurückgeführtem Preßkolben 2 bis direkt vor die Einlaßöffnung 4 reicht und wodurch sämtliche Mengenportionen a, b, c und so weiter in den Preßkanal 1 hineingeschoben werden. In den Figuren 1 bis 3 ist der Rotationskörper 10 mit drei Förderrechen 6 ausgestattet und er wird gegenüber dem Kurbeltrieb 3 mit der doppelten Drehzahl angetrieben, so daß sechs Mengenportionen a, b, c, d, e und f entstehen.

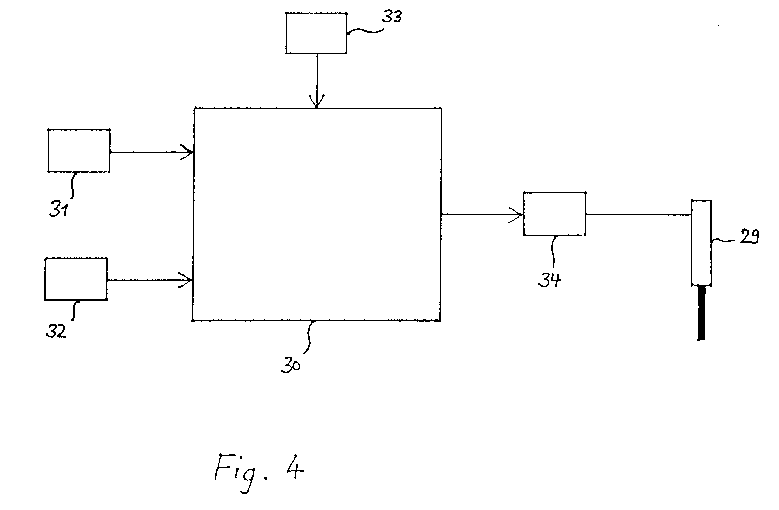

Figur 4 zeigt eine Steuereinrichtung 30, die den nicht dargestellten Hydraulikkreislauf beeinflußt. Der Steuereinrichtung 30, die Bestandteil der Ballenpresse ist, weist zumindest einen Sensor 31 zur Erfassung der von den Fördermitteln (Förderrechen 6) geförderten Menge (Mengenportionen) auf, wobei in Abhängigkeit von der geförderten Menge der Hydraulikzylinder 29 über ein Steuerventil 34 angesteuert wird. Somit wird die Stellung der Förderrechen 6 während ihrer Bewegung entlang der Förderkurven durch die lineare Bewegung des Hydraulikzylinders 29 in Abhängigkeit von der geförderten Menge verändert, so daß die geförderte Menge beziehungsweise deren Volumen oder Dichte weitestgehend konstant bleibt.

Dazu ist es vorgesehen, daß der Sensor 31 oder ein weiterer Sensor 32 die Dichte der zu pressenden Menge in dem Presskanal 1 beziehungsweise der Mengenportionen (a, b, c, d, e und/oder f) erfaßt. Dazu ist der Sensor 31 beziehungsweise der Sensor 32 in entsprechender Weise (beispielsweise als Drucksensor) ausgebildet. Darüber hinaus ist es auch denkbar, daß für den Fall, daß die erfaßte zu pressende Menge zu gering oder zu groß ist, mittels des Schwadaufnehmers 7 und/oder der Querförderschnecke 8 eine Vorverdichtung beziehungsweise eine Unterbrechung des Fördervorganges vorgenommen wird. Zu diesem Zweck weist die Steuereinrichtung 30 in vorteilhafter Weise nicht gezeigte Mittel auf, die die Bewegung des Schwadaufnehmers 7 beziehungsweise der Querförderschnecke 8 beeinflussen.

Weiterhin weist die Steuereinrichtung 30 eine Eingabeeinrichtung 33 zur Sollwerteingabe für unterschiedliche Arten von zu pressenden Mengen auf. Dies hat den Vorteil, daß je nach Art der zu pressenden Menge (beispielsweise landwirtschaftliches Erntegut einerseits und Papier oder Cartonagen andererseits) die einzustellenden beziehungsweise die zu erreichende Dichte optimal eingestellt werden kann.

Es ist darauf hinzuweisen, daß die erfindungsgemäße Ausgestaltung in vorteilhafter Weise Anwendung findet bei selbstfahrenden Großballenpressen für landwirtschaftliche Erntegüter (wie beispielsweise Stroh, Heu oder Silage), das Anwendungsspektrum jedoch nicht darauf beschränkt ist, so daß auch andere Arten von zu pressenden Mengen (wie beispielsweise Papier oder Wertstoffmüll) verarbeitet werden können.

## Patentansprüche

1. Zuführeinrichtung einer Ballenpresse für eine zu pressende Menge, insbesondere für ein landwirtschaftliches Erntegut, mit einem unter einem Presskanal (1) angeordneten und von einem Kurbeltrieb (3) eines Presskolbens (2) aus angetriebenen Rotorförderer, der die zu pressende Menge synchron zu der Bewegung des Presskolbens (2) über eine Kurvenbahn gesteuerte Fördermittel durch einen Zuführkanal (5) in den Presskanal (1) befördert, wobei die Fördermittel, insbesondere Förderrechen (6), über zumindest ein Bewegungselement mit dem Kurbeltrieb (3) derart verbunden sind, daß die Bewegung des Fördermittels entlang seiner Förderkurve (27,28) veränderbar ist, dadurch gekennzeichnet, daß das Bewegungselement ein Hydraulikzylinder (29) ist, der abhängig von Betriebsparametern der Ballenpresse steuerbar ist.

2. Zuführeinrichtung einer Ballenpresse nach Anspruch 1, dadurch gekennzeichnet, daß der Kurbeltrieb (3) über den Hydraulikzylinder (29) mit einem in einem Gelenkpunkt (24) gelagerten Schwenkhebel (25) verbunden ist und daß der Schwenkhebel (25) mit seinem anderen Ende über ein Koppelglied (23) mit den Fördermitteln in Wirkverbindung steht.

3. Zuführeinrichtung einer Ballenpresse nach einem der vorhergehenden Ansprüche, dadurch gekennzeichnet, daß der Kurbeltrieb (3) über ein Koppelglied mit einem in einem Gelenkpunkt (24) gelagerten Schwenkhebel (25) verbunden ist und daß der Schwenkhebel (25) mit seinem anderen Ende über den Hydraulikzylinder (29) mit den Fördermitteln in Wirkverbindung steht.

4. Zuführeinrichtung einer Ballenpresse nach einem der vorhergehenden Ansprüche, dadurch gekennzeichnet, daß die Ballenpresse eine Steuereinrichtung (30) aufweist, die zumindest einen Sensor (31) zur Erfassung der von den Fördermitteln beförderten Menge aufweist, wobei in Abhängigkeit von der beförderten Menge der Hydraulikzylinder (29) gesteuert wird.

5. Zuführeinrichtung einer Ballenpresse nach einem der vorhergehenden Ansprüche, dadurch gekennzeichnet, daß der Sensor (31) oder ein weiterer Sensor (32) die Dichte der zu pressenden Menge in dem Presskanal (1) beziehungsweise der Mengenportionen (a, b, c, d, e und/oder f) erfaßt.

6. Zuführeinrichtung einer Ballenpresse nach einem der vorhergehenden Ansprüche, dadurch gekennzeichnet, daß die Steuereinrichtung (30) eine Eingabeeinrichtung (33) zur Sollwerteingabe für unterschiedliche Arten von zu pressenden Mengen aufweist.

## Claims

1. A feed device of a baling press for a material to be pressed, in particular for an agricultural crop, having a rotor conveyer disposed beneath a baling channel (1) and driven from a crank mechanism (3) of a press plunger (2), which rotor conveyer transports the material to be pressed, in synchronism with the movement of the press plunger (2), over a curved path of controlled conveying means through a feed channel (5) into the baling channel (1), wherein the conveying means, in particular rake conveyers (6), are connected to the crank mechanism (3) via at least one moving element in such a manner that the movement of the conveying means along its transport curve (27, 28) can be changed,
characterised in that the moving element is a hydraulic cylinder (29) which can be controlled in dependence on operating parameters of the baling press.

2. A feed device of a baling press according to Claim 1,
characterised in that the crank mechanism (3) is connected via the hydraulic cylinder (29) with a swivel lever (25) mounted in a hinge point (24)
and in that the swivel lever (25) is in effective communication by its other end with the conveying means via a coupling member (23).

3. A feed device of a baling press according to one of the preceding Claims,
characterised in that the crank mechanism (3) is connected via a coupling member with a swivel lever (25) mounted in a hinge point (24)
and in that the swivel lever (25) is in effective communication by its other end with the conveying means via the hydraulic cylinder (29).

4. A feed device of a baling press according to one of the preceding Claims,
characterised in that the baling press comprises a control mechanism (30) comprising at least one sensor (310 for detecting the material transported by the conveying means, the hydraulic cylinder (20) being controlled in dependence on the transported material.

5. A feed device of a baling press according to one of the preceding Claims,
characterised in that the sensor (31) or another sensor (32) detects the density of the material to be pressed in the baling channel (1) or respectively of the portions of material (a, b, c, d, e and/or f).

6. A feed device of a baling press according to one of the preceding Claims,
characterised in that the control mechanism (30) comprises an input device (33) for inputting set values for different types of material to be pressed.

## Revendications

1. Dispositif d'amenée d'une presse à balles pour une quantité de matière devant être pressée, notamment pour une récolte en agriculture, comportant un convoyeur à rotor, qui est disposé au-dessous d'un canal de pressage (1), est entraîné par un dispositif d'entraînement à manivelle (3) d'un piston de pressage (2) et entraîne la quantité de matière à presser en synchronisme avec le déplacement du piston de pressage (2) par l'intermédiaire de moyens d'entraînement commandés par une piste de came, à travers un canal d'amenée (5), pour amener la quantité de matière dans le canal de pressage (1), les moyens de convoyage, notamment de râteau de convoyage (6), étant reliés à l'aide d'au moins un organe de déplacement au dispositif d'entraînement à manivelle (3) de telle sorte que le déplacement des moyens de convoyage peut être modifié le long de sa course de convoyage (27,28), caractérisé en ce que l'organe de déplacement est un vérin hydraulique (29), qui peut être commandé en fonction de paramètres de fonctionnement de la presse à balles.

2. Dispositif d'amenée d'une presse à balles selon la revendication 1, caractérisé en ce que le dispositif d'entraînement à manivelle (3) est relié par l'intermédiaire d'un vérin hydraulique à un levier pivotant (25), qui est monté dans un point d'articulation (24), et que le levier pivotant (25) est relié, par son autre extrémité, de manière à coopérer avec des moyens de convoyage, par l'intermédiaire d'un organe d'accouplement (23).

3. Dispositif d'amenée d'une presse à balles selon l'une des revendications précédentes, caractérisé en ce que le dispositif d'entraînement à manivelle (3) est relié par l'intermédiaire d'un organe d'accouplement à un levier pivotant (25) monté en un point d'articulation (24), et que le levier pivotant (25) est relié, par son autre extrémité, de manière à coopérer avec les moyens de convoyage, par l'intermédiaire du vérin hydraulique (29).

4. Dispositif d'amenée d'une presse à balles selon l'une des revendications précédentes, caractérisé en ce que la presse à balles comporte un dispositif de commande (30), qui possède au moins un capteur (31) servant à détecter la quantité entraînée par les moyens de convoyage, le vérin hydraulique (29) étant commandé en fonction de la quantité de matière à presser.

5. Dispositif d'amenée d'une presse à balles selon l'une des revendications précédentes, caractérisé en ce que le capteur (31) ou un autre capteur (32) détecte la densité de la quantité de matière à presser dans le canal de pressage (1) ou des portions (a, b, c, d, e et/ou f) de la quantité de matière.

6. Dispositif d'amenée d'une presse à balles selon l'une des revendications précédentes, caractérisé en ce que le dispositif de commande (30) comporte un dispositif d'entrée (33) servant à introduire la valeur de consigne pour différents types de quantités de matière à traiter.
